# EUROPEAN PATENT APPLICATION

(11) **EP 4 621 164 A1**
(43) Date of publication of application: **24.09.2025**
(21) Application number: 24382296.2
(22) Date of filing: 18.03.2024
(51) Int. Cl.: E04H 4/00, F03B 13/00, H02J 3/00

(54) **METHOD AND SYSTEM FOR THE ENERGY MANAGEMENT OF A WAVE GENERATOR SYSTEM**

(71) Applicant: Instant Sport, S.L., 20002 Donostia-San Sebastián, Gipúzkoa (ES)
(72) Inventor: ODRIOZOLA SAGASTUME, José Manuel, 20002 Donostia - San Sebastián (ES)
(74) Representative: Cueto, Sénida

(57) **Abstract**

System and method for the energy management of the energy consumption of a wave facility produced by a generator system (1) connected to an electrical power supply medium. An energy storage system is provided which stores electrical energy by means of the charge (C) of the energy storage system, when the generator system (1) is stopped and/or when the power demanded by the generator system (1) is below a certain threshold. The electrical energy is returned, by means of the discharge (D) of the energy storage system, during wave generation phases and/or when the power demanded by the generator system (1) is above a certain threshold. The invention makes it possible to reduce the power at the point of connection, or to make more efficient use of energy from an optional renewable energy source, adapting to different types of wave cycles.

## Description

### Technical field

The invention relates to a method and a system for managing and controlling the energy consumption of a surfable wave facility. The invention is particularly advantageous in that it allows the improvement of the energy efficiency of this type of sports facilities.

### State of the art

Surfable wave generator systems, e.g., sequential module generator systems, based on the arrangement of a series of contiguous modules acting sequentially to achieve a surfable wave, are known in the Prior Art. The modules may comprise movable elements that are sequentially and repeatably movable and/or tilted by the action of a set of actuators, these sequential movable elements forming a shape-changing movable wall capable of causing disturbances in the mass of water to generate surfable waves. The movable elements move with a time offset between them. A programmable controller communicated with the generator system controls the sequence and offset between adjacent modules, modifying the angle and curvature of the wavefront to generate different wave types. The drives for the movable elements may be of different types, e.g. mechanical or hydraulic. Other modular surfable wave generator systems may comprise other types of generators, for example, a plurality of pneumatic chambers, with adjacent arrangements and also with sequential operation.

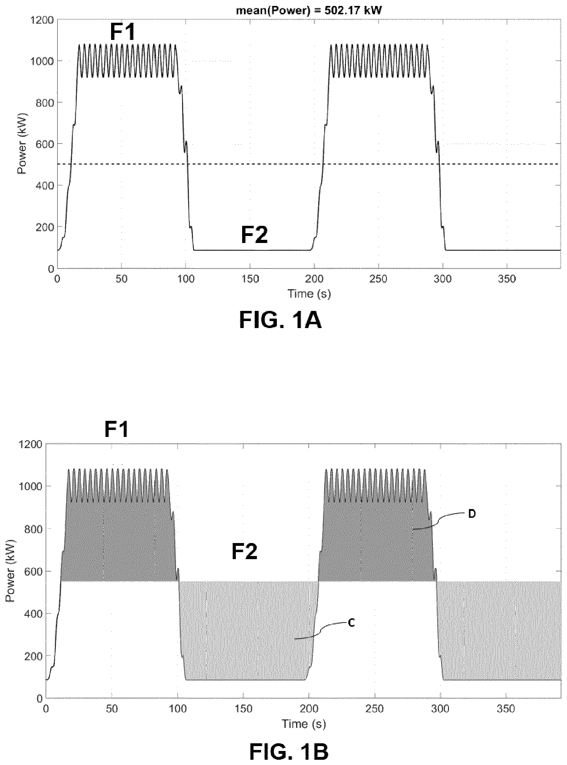

The power consumption of a wave generator system of the type described can typically present a generic profile as shown in Figure 1A. The graphic illustrates the power consumption when a round or series of successive waves is generated before the generator system is stopped. The waves are generated in cycles as shown in Fig. 1A. In each cycle, a series of a certain number of waves of a certain type is generated, with a duration in the order of seconds (first phase F1 of the cycle, with wave generation), establishing a stopping time for the generator system between two consecutive wave series (second phase F2 of the cycle, without wave generation and generator stopped). The wave generation cycle is repeated periodically. Fig. 1A shows a period of very high consumption in the first phase F1 of the cycle, when the waves are generated, followed by a period of minimum consumption in the second phase F2 of the cycle, coinciding with a stopping time for the mass of water of the facility to calm down before restarting the cycle to generate a new series of waves. The minimum consumption normally corresponds to the electronics of the generator system, the water treatment station and other equipment and/or buildings associated with the wave facility.

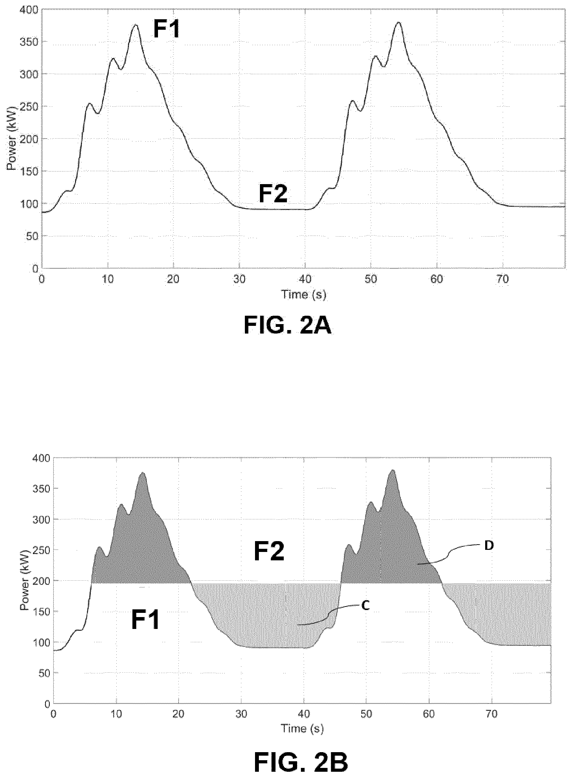

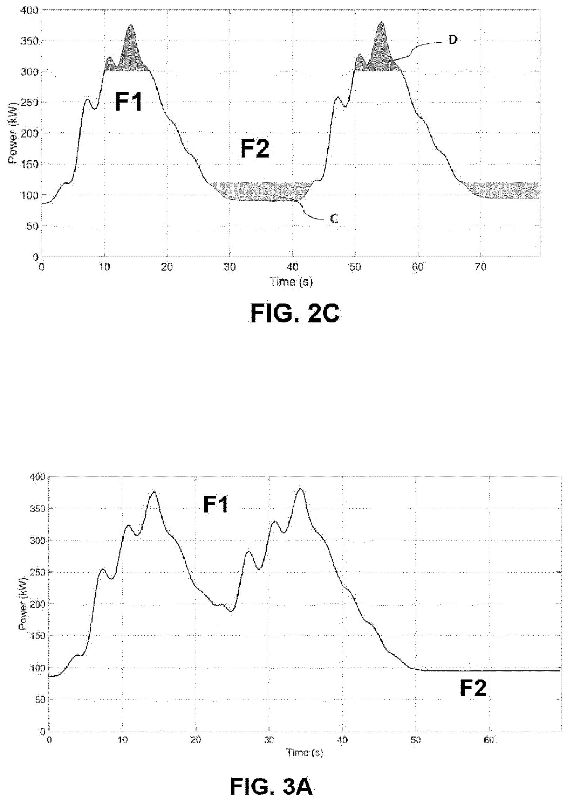

Alternatively, a modular type surfable wave generator system may generate non-overlapping single waves with a certain stopping time between consecutive waves. Figure 2A is a consumption graphic for this second type of waves. The sequence can also be repeated to generate single waves with these characteristics for a desired period. In particular, Figure 2A illustrates the power consumption for a simulation case with two single waves, with a new wave being generated once all modules have completed the movement sequence. Figure 3A illustrates an alternative in which the sequential modules of the generator system produce overlapping single waves, with the generation of the second wave depicted starting before the end of the sequence of module movement corresponding to the first wave. The consumption depicted in Fig. 2A and 3A follows an irregular profile as in the previous case of Fig. 1A.

The power represented in Figures 1A, 2A and 3A is the sum of the powers of all the sequential modules of the generator system.

In the particular case of Fig. 1A (series waves), this type of wave generator system requires highly variable power consumption, for short operating cycles of between several seconds and tens of minutes. As indicated, consumption is very high in the F1 phases of the cycle in which waves are generated, with low consumption in the F2 phases of the cycle with the generator system stopped. This type of consumption profile has disadvantages in relation to the possible electrical power supply systems for the wave generator system. If the system is powered from the electricity grid, high-cost medium-voltage electrical connections are required. Alternatively, if the generator system is powered by means of renewable energies, such as solar energy, there are adaptation difficulties because these systems provide more or less constant energy that does not adapt to the type of cycle described for the wave sequence.

The aim of the present invention is a method and system for the management and control of the energy consumption of a wave facility that provides some improvement in relation to the problems described above and that is adaptable to different types of waves generated, in particular waves in series and single overlapping or non-overlapping waves.

### Brief description of the invention

The invention relates to a method and a system according to the claims.

The independent claims are directed to a method and system for managing the energy consumption of a wave generator system. The generator comprises a set of sequential modules, each sequential module comprising at least one drive contributing to the wave generation. A programmable controller controls the wave generation sequence. This sequence comprises successive cycles, distinguishing in each cycle at least one wave generation phase F1 and at least one phase F2 with no wave generation in which the generator is stopped. There may be other types of periodic cycles in which the generator does not stop until the end of the cycle.

The system comprises an electrical power supply means connected to the drives of the generator system and an energy storage system.

This energy storage system is capable of storing electrical energy by means of the charge (C) of the energy storage system during phase F2 (generator stopped). Alternatively or additionally, the charge (C) takes place when the power demanded by the generator system is below a certain threshold. Additionally, the energy storage system is capable of returning electrical energy, by means of the discharge (D) of the energy storage system, during the wave generation phase F1 of the cycle and/or when the power demanded by the generator system is above a certain threshold. The threshold is a setpoint value of the power demanded by the system.

The system according to the invention comprises at least one set of sequential modules. Each sequential module includes at least one drive that contributes to the formation of waves. A programmable controller that generates a sequence of waves, with successive cycles, wave generation phases F1 and at least one phase F2 in which the generator system is stopped. An electrical power supply means is connected to the drives of the generator system. An energy storage system is capable of storing and returning electrical energy by means of the charge (C) and discharge (D) described above.

Optionally, the system may include a renewable energy source. In this way, power can be transferred to the generator system from the grid or from such a renewable energy source. The renewable energy source can be a solar energy source (e.g. photovoltaic panels) or other renewable energy sources (wind, geothermal).

By having an energy storage system, the invention makes it possible to reduce the peak power demanded or to make the power demanded more constant. This makes it possible to reduce the power at the connection point or to use the renewable energy source more efficiently.

The system of the invention makes it possible to reduce the size of the supply transformer of the facility or to implement a better use of the renewable energy source in case it is used, increasing the net energy efficiency of the installation.

Optionally, the generator system comprises a plurality of movable elements by the action of drives.

Optionally, the energy storage system is a modular kinetic accumulator.

Optionally, the kinetic accumulator has a plurality of electric motors that rotate at a variable speed and exchange energy with the drives of the generator system, so that the controller calculates the number of electric motors required and their speed parameters to implement an adequate energy management depending on the type of wave to be generated and the power target set.

Further options and advantages will be explained in greater detail in the detailed description with reference to the particular embodiments described.

### Brief description of figures

The details of the invention are shown in the accompanying figures, which are not intended to limit the scope of the invention:
- Figure 1A illustrates an example of a generic energy consumption profile of a modular type surfable wave generator, when generating wave series of a certain duration and a waiting time between series.
- Figure 1B illustrates the optimisation of energy consumption for a profile as in Fig. 1A, when using an energy storage system according to the invention.
- Figure 1C shows the consumption profile of the system of Fig. 1A, provided with an energy storage system according to the invention, establishing a limitation of the maximum or minimum power.
- Figure 1D shows the consumption profile of the system of Fig. 1A, provided with an energy storage system according to the invention and short cycle power limitation.
- Figure 2A shows a simulation of the energy consumption profile of a modular type surfable wave generator, when non-overlapping single waves are generated with a certain stopping time between consecutive waves.
- Figure 2B illustrates the optimisation of energy consumption for a profile as in Fig. 2A, when using an energy storage system according to the invention.
- Figure 2C shows the consumption profile of the system of Fig. 2A, provided with an energy storage system according to the invention, establishing a limitation of the maximum or minimum power.
- Figure 3A shows a simulation of the energy consumption profile of a modular type surfable wave generator, when overlapping single waves are generated with a certain stopping time between consecutive waves.
- Figure 3B illustrates the optimisation of energy consumption for a profile as in Fig. 3A, when using an energy storage system according to the invention.
- Figure 3C shows the consumption profile of the system of Fig. 3A, provided with an energy storage system according to the invention, establishing a limitation of the maximum or minimum power.
- Figure 4 is a perspective view of a surfable wave lagoon with a modular type wave generator system, made up of a plurality of sequential modules comprising movable elements that integrate a movable barrier.
- Figure 5 shows a perspective view of the wave generator system of Fig. 4, wherein the movable elements comprise horizontal pistons.
- Figure 6 shows an embodiment of the invention, including a short-term energy storage system adapted to different energy consumption ranges demanded by the facility.
- Figure 7 shows the system of Fig. 6 additionally provided with an additional energy storage system for long-term energy storage.

### Detailed description of the invention

As explained in detail in the introductory section, the invention is applicable to systems with a consumption profile as shown in Figure 1A (Prior Art), corresponding to the generation of wave cycles consisting of a first phase F1 in which a series of waves is generated, for example, about 20 waves every 4 seconds without stopping the generator system, and a second phase F2 with the generator system stopped (for example, a waiting time between series of about 100 seconds). The graphic shows a minimum power consumption Pₘᵢₙ, a maximum peak power Pₘₐₓ and an average power consumption Pₘ. Specifically, in the simulation example shown, the peak power Pₘₐₓ exceeds 1,000 kW, with an average power Pₘ of about 500 kW and a minimum power Pₘᵢₙ of less than 100 kW.

Figure 1B illustrates the optimisation of energy consumption for a profile of Fig. 1A. The energy storage system is able to store surplus electrical energy during the F2 phases of the cycle when the generator system is stopped and no energy is demanded for the wave generation system (charge (C)). Likewise, the energy storage system is able to return accumulated electrical energy, during the F1 phases of wave generation (discharge (D)).

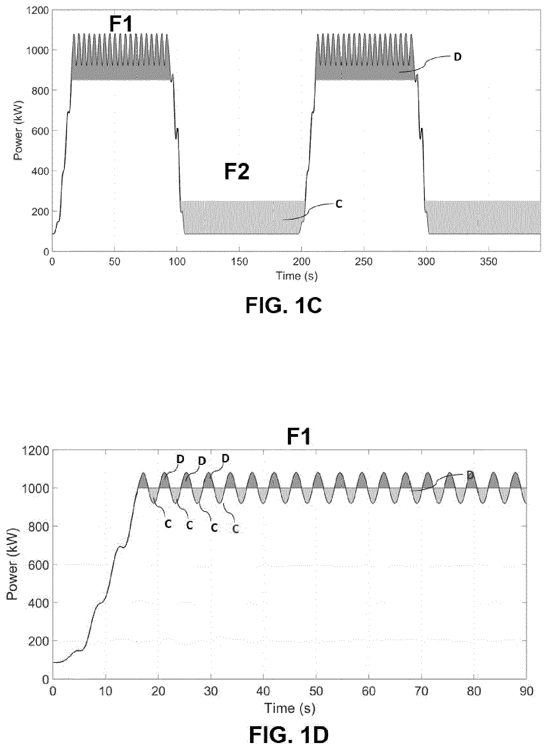

Figure 1C illustrates the consumption profile of the system of Fig. 1A, provided with the energy storage system of the invention, when in addition a limitation of the demanded power is set. For example, the maximum power may be limited when there is a limit on the peak power of the power supply. Alternatively or simultaneously, the minimum power may be limited above a power supplied by a renewable energy source.

Figure 1D shows the consumption profile of the system in Fig. 1A, with an energy storage system with short charge (C) and discharge (D) cycles during the F1 phase of wave generation, establishing a reduced power limitation. As shown in Fig. 1D, the charge (C) of the energy storage system takes place during the overlapping wave generation F1 phases, with energy storage only below a certain threshold or setpoint of the power demand. In the example of Fig. 1D, the charge (C) occurs when the power demand falls below a threshold or setpoint power of 1,000 kW during the F1 phase and the discharge above said threshold.

The invention is applicable to the generation of series of waves and also to single waves, overlapping or non-overlapping.

Figure 2A shows a simulation of the energy consumption profile of a modular type surfable wave generator, when non-overlapping single waves are generated during a first phase F1 with a certain waiting time between consecutive waves during the second phase F2 of generator system stop.

Figure 2B illustrates the optimisation of energy consumption for the profile of Fig. 2A. As in the case of Fig. 2A, the energy storage system stores electrical energy during the phases F2 of the cycle when the generator system is stopped and waves are not generated (charge (C)). Similarly, the energy storage system returns energy during the phases F1 of wave generation (F1) (discharge (D)).

Figure 2C illustrates the consumption profile of the system of Fig. 1A, provided with the energy storage system and power limitation as in the case of Fig. 1C.

Figure 3A shows a simulation of the energy consumption profile of a modular type surfable wave generator, when overlapping single waves are generated during a first phase F1, with a certain waiting time between groups of consecutive overlapping waves during the second phase F2 of generator system stop.

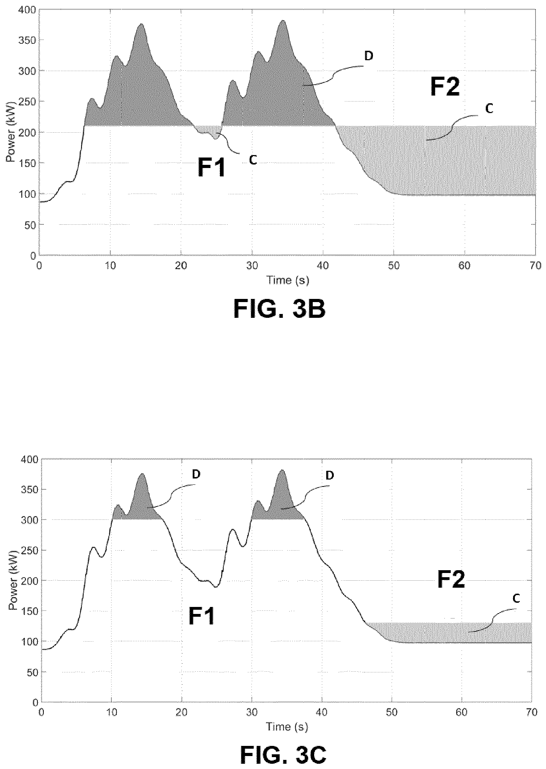

Figure 3B illustrates the optimisation of energy consumption for a profile of Fig. 3A. In this case, the charge (C) of the energy storage system can take place during the F2 phases when the generator system is stopped without generating waves and also during the F1 phases of overlapping wave generation, accumulating energy below a certain threshold or setpoint of the power demanded. In the example of Fig. 3B the charge (C) occurs when the demanded power drops below a threshold or setpoint power of 210 kW. The energy storage system returns energy when there is a demand for overlapping wave generation in phase F1 (discharge (D)).

Figure 3C shows the consumption profile of the system of Fig. 3A, provided with an energy storage and power limiting system.

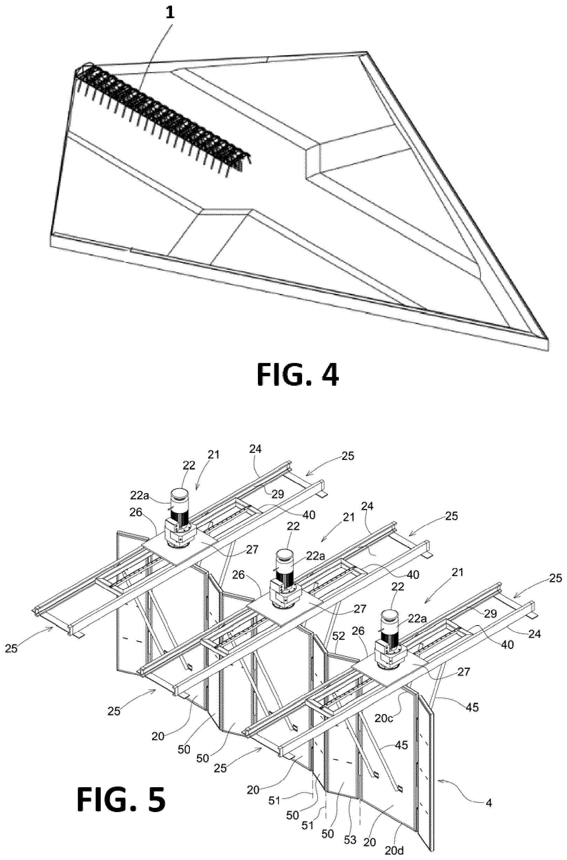

Figure 4 is a perspective view of a surfable wave lagoon with a modular type wave generator system, formed by a plurality of sequential modules. Figure 5 shows a perspective view of the wave generator system (1) of Fig. 4, where the drives of the sequential modules move horizontal pistons (20) with a water displacing front face for wave formation W ahead of the generator. The mechanism of movement of the pistons (20) is explained in detail in patent EP3409337. The pistons (20) form part of a hinged barrier (4) which also comprises panels (50) delimited by an upper edge (52) and a lower edge (53) and vertical rotation axes (51). The drive system (21) of the barrier (4) comprises a plurality of drive sets (22) provided with motors (22a). Each assembly is supported by a respective frame (24). The frame (24) has two transverse ends (25) configured for attachment to a structure. Each drive set (22) protrudes above a top face (27) of a plate (26) of the frame (24). The pistons (20) are suspended from carriages (40). Tie rods (45) reinforce the attachment of each piston (20) to the corresponding carriage (40).

The method and system of the invention are applicable to wave generation systems other than the one shown in figures, being in any case advantageous when applied to sequential type modular generators, in which the energy demand is managed by modules and higher power peaks tend to occur.

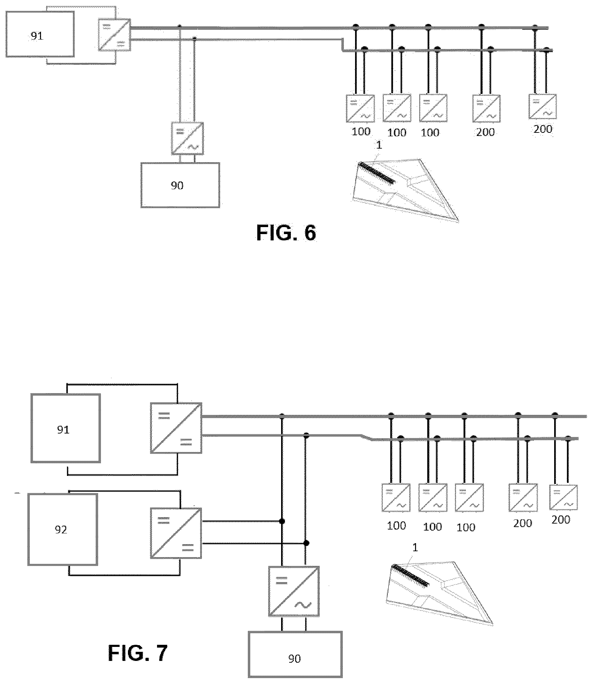

As shown in Figures 6 and 7, the wave generator system (1) is powered from three-phase current. In this preferred embodiment, the power circuit of the wave generator system (1) is based on the rectification of alternating current (AC) electrical energy to a direct current (DC) circuit. The electrical current is distributed through this direct current (DC) circuit to a series of direct current to alternating current converters (DC/AC). These converters (DC/AC) supply the various motors or drives (100) of the pistons (20) or other movable elements that may have the sequential modules in other mechanical or pneumatic generator systems.

Preferably, as in the embodiment of figures, the energy storage system comprises a plurality of kinetic accumulators provided with electric motors (200) directly connected to the direct current (DC) circuit, through converters (DC/AC) for better efficiency.

Each electric motor (200) of the storage system makes use of the inertia of the rotor of the electric motor (200) itself or may, optionally, be connected to additional inertia in order to increase the stored electrical energy. In either case, the electric motor (200) is capable of being accelerated or decelerated to absorb or deliver electrical energy, i.e. it accumulates rotational kinetic energy and subsequently transforms this accumulated kinetic energy into electricity in order to feed the system's power peaks. In this way, the electric motor (200) supplies energy to the kinetic accumulator during charging and extracts energy from the kinetic accumulator during discharging, as illustrated in Fig. 1B, 1C, 1D, 2B, 2C, 3B, and 3C, adapting to different types of wave generation cycles.

The described storage system is also advantageous because it conveniently adapts to the energy range required by the wave generator system (1) and requires a small footprint. Other implementations for the storage system are not ruled out.

The system of the invention also provides good energy efficiency and its integration in the electrical system has a positive impact on the energy efficiency of the other components, allowing a significant reduction of the converter (AD/DC) from the grid current to direct current, as well as a reduction in the size of the transformer (90).

Preferably, the storage system has a modular structure composed of a plurality of kinetic accumulators. This option leads to an increase in efficiency by allowing only the necessary accumulators to be activated depending on the size and type of wave generated.

The described energy storage system, based on kinetic storage, can be defined as a short-term storage system, capable of implementing numerous storage cycles adapted to wave generation.

The described storage system is compatible with wave generator systems with different types of electric, hydraulic or other drives.

The system of the invention can be configured to limit the maximum power or establish a constant input power for the generator system (1).

For this purpose, a power meter may be provided which obtains a power reading from the drives (100) of the generator system (1) and transmits the corresponding signals to the controller. From these readings, the controller calculates and sets a control output to adjust the speed of the electric motors (200) of the energy storage system.

The power can be obtained by means of a power meter integrated in the converter, inserted in the circuit at the input or output of the converter or from partial readings from a power signal demanded by each module of the generator system (1).

Optionally, the controller also receives a reading of the power generated by the renewable energy source (91). In this way, in addition to, for example, limiting the input power of the generator system (1) to a constant value, it is possible to optimise the consumption of the renewable energy source (91) by setting a setpoint for a minimum input power to the generator system (1) higher than the power generated by the renewable energy source (91).

Optionally, as in the embodiment of the figures, the renewable energy source (91) is a solar energy source, due to its renewable nature and its usual availability and adaptability to the type of daytime and preferably summer activity that takes place in this type of facility. However, other renewable energy alternatives, such as wind or geothermal, are not ruled out.

Preferably, as shown in Fig. 6, a direct current converter (DC/DC) is used to transfer the energy from the renewable energy source (91) to the wave generator system (1). The choice of the converter (DC/DC) is advantageous because it allows optimising the energy transfer from the solar panels to the generator, minimising the associated energy losses, compared to other commercial systems that integrate DC/AC inverters.

The renewable energy source (91) may be sufficient to cover the minimum energy consumption in the F2 phases of the generation cycle when there are no waves and the generator system is stopped, thus not requiring energy storage, defining a first consumption range of 0%-E1 %.

A second range (E1%-E2%) can be defined, where the energy consumption demanded by the generator system (1) depends on the type of wave generated at each moment, typically a profile similar to Fig. 1A for successive wave series generation cycles. The short-term energy storage system (the kinetic accumulator described above) stores energy during the F2 phase of the cycle in which no waves are generated and the generator is stopped. The stored energy can then be released during the F1 phases of the cycle with wave generation. In this way, it is possible to achieve a generator system (1) that absorbs a constant average power Pm . The kinetic accumulator developed for the wave generator can provide energy savings up to the percentage E2 (between E1% and E2%) for this second range of energy requirement.

The power can be transferred from the grid or from the solar panel system or another renewable energy source. Short-term energy storage allows for a reduction in the size of the solar panel system.

Additionally, given the aquatic and sporting nature of the activity carried out in the wave facilities, it is advantageous to combine this first short-term energy storage system with a second long-term energy storage system that makes it possible to store a second energy surplus. This second energy surplus can be obtained, for example, through the use of oversized solar panels, so that the surplus generated during periods of higher solar radiation is accumulated to provide energy in the long term in other possible periods of solar radiation deficit. In this way, it is possible to obtain a system capable of adapting to three different energy needs of the wave installation:
- a first consumption range (generator system stopped), up to a minimum percentage of energy E1 required by the facility, obtainable from the renewable energy source, without requiring storage;
- a second consumption range (with wave generation), from the minimum energy percentage E1 to an average energy percentage E2, requiring energy storage in a short-term system, preferably, the kinetic accumulator system described; and
- a third consumption range (surplus energy produced), from the average energy percentage E2 to 100% of the design energy E3 for the facility: to cover this energy requirement range, part of the energy must be stored in the in the short term system (kinetic accumulators) and another part in an additional long term energy storage system.

The specific percentages and magnitudes that determine the three ranges (e.g. 0-10%, 10%-50% and 50%-100% for values of E1=10%, E2=50% and E3=10%) may vary. The sizing of each facility can be adapted to the availability of renewable energy (e.g. availability of solar energy) and the intended use of the facility.

Preferably, the long-term energy storage system used are lithium batteries (92) connected by means of a converter (DC/DC) (see Fig. 7), due to their high efficiency and reasonable cost compared to other types of batteries. The integration of this second long-term storage system in the direct current (DC) circuit through a converter (DC/DC) favours the efficiency of the batteries.

In the particular embodiment of Fig. 6 and 7, with reference to the first two ranges, the particularities described above make it possible to obtain an energetically sustainable and self-sufficient facility, using the first kinetic energy accumulation system described and sizing solar panels to provide a constant power demand in periods of high solar radiation. In order to obtain an equally self-sufficient facility including periods of lower solar radiation, it is possible to oversize the solar panels, producing and accumulating surplus energy so that it can be released at times of lower solar radiation. For this purpose, the electrical system additionally integrates the second long-term energy storage system. Thus, in the third section E2-E3, solar panels and the two energy accumulators can be used: the system based on kinetic accumulators for short-term storage and the Li battery (92) system for long-term storage, with the possibility of reaching 100% energy self-sufficiency with respect to an equivalent installation which does not generate surplus energy.

## Claims

1. Method, for the energy consumption management of a wave facility with a generator system (1), comprising the following steps:
- generating by means of a programmable controller a wave generation sequence comprising successive cycles, wherein each cycle comprises at least one wave generation phase F1 and at least one phase F2 in which the generator system is stopped,
- connecting the generator system to an electrical power supply means;
- providing an energy storage system;
- storing electrical energy, by means of the charge (C) of the energy storage system, during phase F2 with the generator stopped and/or when the power demanded by the generator system (1) is below a certain threshold,
- returning electrical energy, by means of the discharge (D) of the energy storage system, during the entire wave generation phase F1 and/or when the power demanded by the generator system (1) is above a certain threshold.

2. Method, according to claim 1, the generator system (1) generating waves in series during phase F1.

3. Method, according to claim 1, the generator system (1) generating overlapping single waves during phase F1.

4. Method, according to claim 1, the generator system (1) generating non-overlapping single waves during phase F1.

5. Method, according to claim 1, wherein the input power to the generator system (1) is limited to a maximum value and/or wherein a constant input power to the generator system (1) is established.

6. Method, according to claim 5, wherein the input power to the generator system (1) is limited to a constant value, a constant value being considered equal to the average power demanded +- 25%.

7. Method, according to any one of the preceding claims, wherein the generator system is connected to an electrical energy supply means comprising a renewable energy source (91), for example, a solar energy source.

8. Method, according to claim 7, wherein a minimum input power to the generator system (1) is established higher than the power generated by the renewable energy source (91).

9. Method, according to claim 5, 6 or 8, wherein the generator system (1) comprises a plurality of movable elements by the action of drives (100), wherein the energy storage system is a modular kinetic accumulator comprising a plurality of electric motors (200) rotating at a variable speed and exchanging energy with the drives (100) of the generator system, and wherein the controller calculates the required number of electric motors (200) and their speed parameters to implement an adequate energy management depending on the type of wave to be generated and the power target set.

10. Method, according to any one of the preceding claims, wherein the energy storage system is cooled by means of water from the wave facility.

11. Method, according to any one of the preceding claims, comprising the step of storing a surplus renewable energy in a long-term additional energy storage system.

12. System, for the energy consumption management of a wave generator system (1), comprising:
- at least one set of sequential modules, wherein each sequential module comprises at least one drive (100) that contributes to the formation of waves,
- a programmable controller that generates a wave generation sequence, the sequence comprising successive cycles wherein each cycle comprises at least one wave generation phase F1 and at least one phase F2 in which the generator system is stopped,
- an electrical power supply means connected to the drives (100) of the generator system (1);
- an energy storage system capable of storing electrical energy, by means of the charge (C) of the energy storage system, during phase F2 with the generator stopped and/or when the power demanded by the generator system (1) is below a certain threshold, and capable of returning electrical energy, by measn of the dischare (D) of the energy storage system, during the entire wave generation phase F1 and/or when the power demanded by the generator system (1) is above a certain threshold.

13. System, according to claim 12, wherein the generator system (1) is connected to an electrical power supply means comprising a renewable energy source (91), for example, a solar energy source.

14. System, according to claim 13, wherein the transfer of renewable energy to the generator system (1) is performed by means of a direct current converter (DC/DC).

15. System, according to claim 12 or 14, wherein the electrical energy is distributed to the generator system (1) through a direct current (DC) circuit and wherein the energy storage system comprises at least one kinetic accumulator provided with an electric motor (200) connected to said direct current (DC) circuit through a converter (DC/AC).

16. System, according to claim 15, wherein the kinetic accumulator comprises at least one additional inertia to increase the stored kinetic energy.

17. System, according to claim 15 or 16, wherein the energy storage system is modular comprising a plurality of electric motors (200) rotating at a variable speed and exchanging energy with the drives (100) of the generator system (1) modules.

18. System, according to any one of claims 12 to 17, comprising an additional energy storage system that stores a long-term energy surplus.

19. System, according to claim 18, wherein the additional energy storage system comprises Lithium batteries (92) and is connected through a converter (DC/DC).
